# EUROPÄISCHE PATENTSCHRIFT

(11) **EP 0 889 795 B1**
(45) Veröffentlichungstag und Bekanntmachung des Hinweises auf die Patenterteilung: **24.05.2000**
(21) Anmeldenummer: 97922818.6
(22) Anmeldetag: 26.03.1997
(51) Int. Cl.: B60K 41/06

(54) **VERFAHREN ZUM STEUERN EINER BRENNKRAFTMASCHINE**
PROCESS FOR CONTROLLING AN INTERNAL COMBUSTION ENGINE
PROCEDE DE REGULATION D'UN MOTEUR A COMBUSTION INTERNE

(30) Priorität: 28.03.1996 DE 19612455
(43) Veröffentlichungstag der Anmeldung: 13.01.1999
(73) Patentinhaber: SIEMENS AKTIENGESELLSCHAFT, 80333 München (DE)
(72) Erfinder: ENGL, Maximilian, D-93059 Regensburg (DE); SCHÜRZ, Willibald, D-93089 Aufhausen (DE); FRÖHLICH, Johann, D-84030 Landshut (DE)
(86) Internationale Anmeldenummer: DE9700620
(87) Internationale Veröffentlichungsnummer: WO9736762

(56) Entgegenhaltungen:
- DE-A- 19 509 139

## Beschreibung

Die Erfindung betrifft ein Verfahren zum Steuern einer Brennkraftmaschine nach dem Oberbegriff von Patentanspruch 1, das aus der DE 195 09 139 A1 bekannt ist.

Aus der DE 42 32 973 A1 ist ein Verfahren zum Einstellen des Drehmoments eines Otto-Motors während eines Schaltvorganges bekannt. Bei diesem Verfahren wird bei Beginn eines Schaltvorganges die Füllung im Zylinder einer Brennkraftmaschine erhöht und gleichzeitig der Zündwinkel so verändert, daß sich keine Drehmomenterhöhung ergibt. Beginnend ab dem Zeitpunkt, an dem wieder eine Last an der Kupplung anliegt, wird der Zündwinkel wieder auf einen optimalen Wert eingestellt und somit eine sehr schnelle Drehmomenterhöhung erreicht. Dadurch wird ein ruckelfreies Schalten ermöglicht. Im Nicht-Schaltbetrieb wird bei diesem Verfahren ein Master-Soll-Motordrehmoment vorgegeben, wobei hier der Fahrpedalwinkel als Wunsch für das Antriebsmoment an den Rädern interpretiert wird. Um dieses Antriebsmoment auch tatsächlich zu erreichen wird dieses Antriebsmoment in Abhängigkeit davon korrigiert, welche Aggregate eingeschaltet sind und was für Reibungskräfte temperaturabhängig zu überwinden sind.

Dieses Verfahren hat den Nachteil, daß je nach den Belastungen des Motors durch andere Aggregate beziehungsweise Reibungskräfte, nicht grundsätzlich dieses gewünschte Drehmoment vom Motor aufgebracht werden kann.

Die Aufgabe der Erfindung ist es, ein Verfahren zu schaffen, das einen komfortablen und zuverlässigen Betrieb einer Brennkraftmaschine ermöglicht.

Die Aufgabe wird erfindungsgemäß durch die Merkmale des Anspruchs 1 gelöst.

Das erfindungsgemäße Verfahren hat den Vorteil, daß ein zur Verfügung stehender Drehmomentbereich aus dem maximalen und dem minimalen Drehmoment ermittelt werden kann. Gleichzeitig können die Werte des maximalen Drehmoments, des minimalen Drehmoments und des Verlustdrehmoments auch anderen Steueroder Regeleinrichtungen wie z.B. einer Anti-Schlupf-Regelung oder einem ABS-System zur Verfügung gestellt werden.

Das maximale und das minimale Drehmoment werden abhängig von der Drehzahl, einem Verlustdrehmoment und mindestens einer Betriebsgröße ermittelt. Unter Betriebsgößen werden in diesem Zusammenhang alle Meßgrößen verstanden, so z.B. Drehzahl, Umgebungstemperatur, Öltemperatur und Umgebungsdruck, wobei es unerheblich ist, ob die Meßgrößen direkt von einem Sensor erfaßt werden oder ob sie aus anderen Meßgrößen und aus auf einem Prüfstand ermittelten Kennfeldwerten ermittelt werden. Betriebsgrößen können auch Stellgrößen von Reglern sein, die in bekannten Motorsteuerungssystemen eingesetzt werden.

Ein Drehmomentfaktor wird aus dem Pedalwert und der Drehzahl abgeleitet. Das hat den Vorteil, daß einem Pedalwert je nach Drehzahl unterschiedliche Werte des Drehmomentfaktors zugeordnet sein können. So ist eine gute Fahrbarkeit eines Fahrzeugsgewährleistet, in dem die Brennkraftmaschine angeordnet ist.

Vorteilhafte Ausgestaltungen der Erfindung sind in den Unteransprüchen gekennzeichnet.

Ein Ausführungsbeispiel der Erfindung ist im folgenden unter Bezugnahme auf die schematischen Zeichnungen näher erläutert. Es zeigen:
- Figur 1:: eine Brennkraftmaschine, bei das erfindungsgemäße Verfahren angewendet wird,
- Figur 2:: ein Blockschaltbild des erfindungsgemäßen Verfahrens,
- Figur 3:: ein Blockschaltbild zum Bestimmen des Drehmomentfaktors,
- Figur 4:: ein Kennfeld KF_2,
- Figur 5:: ein Blockschaltbild zum Bestimmen des minimalen Drehmoments,
- Figur 6:: ein Blockschaltbild zum Bestimmen des Verlustdrehmoments,
- Figur 7:: ein Blockschaltbild zum Bestimmen des maximalen Drehmoments,
- Figur 8:: ein Blockschaltbild zum Bestimmen der maximalen Luftmasse bei einer Brennkraftmaschine mit einem Turbolader,
- Figur 9:: eine Detaildarstellung des Korrekturblocks aus dem Blockschaltbild von Figur 2.

Für gleiche Bezugszeichen werden figurenübergreifend die gleichen Bezugszeichen verwendet. Für alle Blockschaltbilder gilt, daß an Summierstellen die Eingangsgrößen summiert werden und die Ausgangsgröße die Summe der Eingangsgrößen darstellen. Des weiteren gilt für alle Blockschaltbilder, daß an den Multiplizierstellen alle Eingangsgrößen multipliziert werden, und daß die Ausgangsgröße jeder Multiplizierstelle dem Produkt der Eingangsgrößen entspricht.

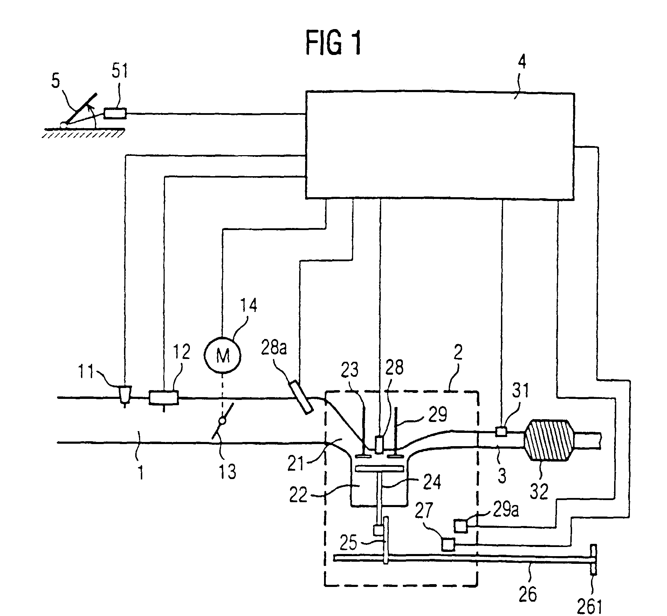

Eine Brennkraftmaschine eines Kraftfahrzeugs umfaßt einen Ansaugkanal 1 (Figur 1), einen Motorblock 2, einen Abgaskanal 3 und eine Steuereinrichtung 4, bei der das erfindungsgemäße Verfahren angewendet wird. Der Ansaugkanal 1 mündet in einen Einlaßkanal 21, an dessen Einmündung in einen Zylinder 22 ein Einlaßventil 23 angeordnet ist. Aus Gründen der Übersichtlichkeit ist dabei nur ein Zylinder 22 der Brennkraftmaschine dargestellt. Der Zylinder 22 weist einen Kolben 24 auf, der über eine Pleuelstange 25 mit einer Kurbelwelle 26 verbunden ist. Ein Drehzahlgeber 27 ist derart im Motorblock 2 angeordnet, daß er die Drehzahl der Kurbelwelle 26 erfaßt. Die Kurbelwelle weist an einem freien Ende einen Kupplungsflansch 261 auf, an dem eine nicht dargestellte Kupplung oder ein nicht dargestellter Wandler eines Automatikgetriebes angeordnet ist. Das freie Ende wird alternativ als das kupplungsseitige Ende bezeichnet. Im folgenden wird für den Kupplungsflansch 261 und die Kupplung zusammenfassend der Begriff Kupplung 261 verwendet.

Im Zylinder 22 ist des weiteren eine Zündvorrichtung 28 angeordnet. An einer Auslaßöffnung ist ein Auslaßventil 29 angeordnet. Im Motorblock ist ferner ein Öltemperatursensor 29a angeordnet, von dem die Temperatur im Motorblock erfaßt wird. In dem Abgaskanal 3 ist ein Lambdasensor 31 und ein Katalysator 32 angeordnet.

In dem Ansaugkanal 1 ist ein Temperatursensor 11 und ein Luftmassenmesser 12 stromaufwärts von einer Drosselklappe 13 vorgesehen. Ein elektromechanischer Aktor (im folgenden als Drosselklappensteller 14 bezeichnet) wirkt auf die Drosselklappe 13 ein und bestimmt ihren Öffnungsgrad.

Ein Pedalwertgeber 51 erfaßt einen Pedalwert eines Pedals 5. Die Steuereinrichtung 4 ist elektrisch leitend mit Sensoren und Stellantrieben, die Stellgliedern zugeordnet sind, verbunden. Sensoren stellen beispielsweise der Pedalwertgeber 51, der Temperatursensor 11, der Luftmassenmesser 12, der Drehzahlgeber 27, der Öltemperatursensor 29a und der Lambdasensor 31 dar. Es können aber noch weitere Sensoren außer den in der Figur 1 dargestellten vorhanden sein. So kann beispielsweise auch ein Saugrohrdrucksensor vorhanden sein, wobei dann gegebenenfalls auf den Luftmassenmesser 12 verzichtet werden kann. Ebenso kann zum Beispiel ein Temperatursensor zum Erfassen der Kühlwassertemperatur vorgesehen sein. Die Sensoren erfassen die Betriebsgrößen der Brennkraftmaschine. Die Meßsignale der Sensoren stellen Eingangsgrößen für die Steuereinrichtung 4 dar.

Stellgeräte umfassen jeweils einen Stellantrieb und ein Stellglied. Der Stellantrieb ist ein elektromotorischer Antrieb, ein elektromagnetischer Antrieb, ein mechanischer Antrieb oder ein weiterer dem Fachmann bekannter Antrieb. Die Stellglieder sind aus der Drosselklappe 13, als Einspritzvorrichtung 28a, als Zündvorrichtung, als ein nicht dargestellter Umschalter zwischen zwei verschiedenen Saugrohrlängen oder als eine nicht dargestellte Vorrichtung zum Verstellen des Hubverlaufs, des Hubbeginns oder des Hubendes eines Motorventils ausgebildet. Auf die Stellgeräte wird im folgenden jeweils mit dem zugeordneten Stellglied Bezug genommen.

Die Ausgangsgrößen der Steuereinrichtung 4 entsprechen den Steuersignalen für die Stellglieder. Abhängig von den zugeführten Eingangsgrößen bildet die Steuervorrichtung 4 entsprechend ihrer Programme Steuersignale für die Stellglieder.

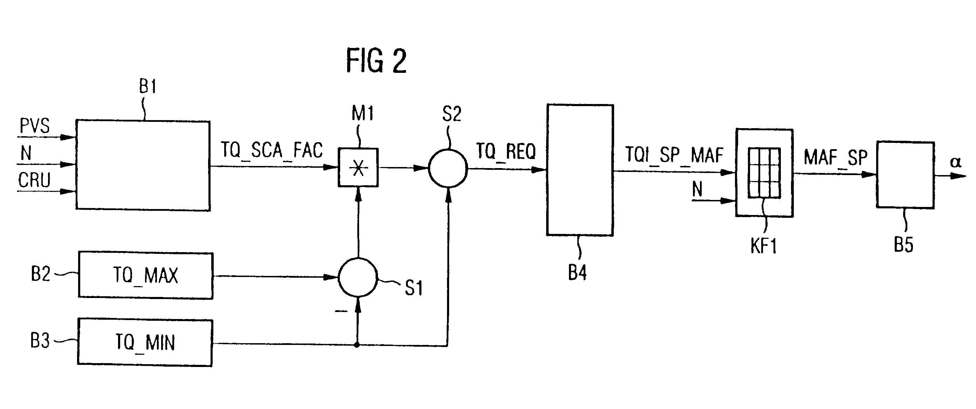

Im Blockschaltbild von Figur 2 ist das Verfahren zum Steuern der Brennkraftmaschine dargestellt. In einem Block B1 wird in Abhängigkeit von dem Pedalwert PVS, der Drehzahl N und einem Stellwert CRU eines an sich bekannten Fahrgeschwindigkeitsreglers ein Drehmomentfaktor TQ_SCA_FAC gebildet. Der Drehmomentfaktor stellt eine dimensionslose Größe mit einem Wertbereich zwischen 0 und 1 dar. Ein maximales Drehmoment TQ_MAX stellt die Ausgangsgröße des Blocks B2 dar. Das maximale Drehmoment TQ_MAX stellt wie alle anderen Größen in den Blockschaltbildern eine Rechengröße dar. Das maximale Drehmoment TQ_MAX entspricht dem maximalen Drehmoment, das an der Kupplung 261 von der Brennkraftmaschine zu Verfügung gestellt werden kann.

Die Ausgangsgröße des Blocks B3 ist das minimale Drehmoment TQ_MIN, das an der Kupplung 261 der Brennkraftmaschine zur Verfügung gestellt werden kann. Das minimale Drehmoment TQ_MIN kann zum Bremsen des Fahrzeugs verwendet werden, falls es einen negativen Wert aufweist.

Das maximale Drehmoment TQ_MAX und das negative minimale Drehmoment TQ_MIN sind Eingangsgrößen der Summierstelle S1. Die Ausgangsgröße der Multiplizierstelle M1 ergibt sich aus dem Produkt des Drehmomentfaktors TQ_SCA_FAC und der Differenz zwischen maximalem und minimalem Drehmoment TQ_MAX, TQ_MIN. An der Summierstelle S2 wird diese Ausgangsgröße und das minimale Drehmoment TQ_MIN addiert. Die Ausgangsgröße der Summierstelle S2 bildet somit das Solldrehmoment TQ_REQ.

Das Solldrehmoment TQ_REQ bildet die Eingangsgröße in den Korrekturblock B4, in dem in Abhängigkeit von den Betriebsgrößen und einem Verlustdrehmoment TQ_LOSS ein Betriebsgrößendrehmoment TQI_SP_MAF gebildet wird. Aus einem Kennfeld KF1 wird in Abhängigkeit von dem Betriebsgrößendrehmoment TQI_SP_MAF und der Drehzahl N ein Luftmassensollwert MAF_SP ermittelt. In Block B5 wird dann das Steuersignal α für den Drosselklappensteller 14 ermittelt.

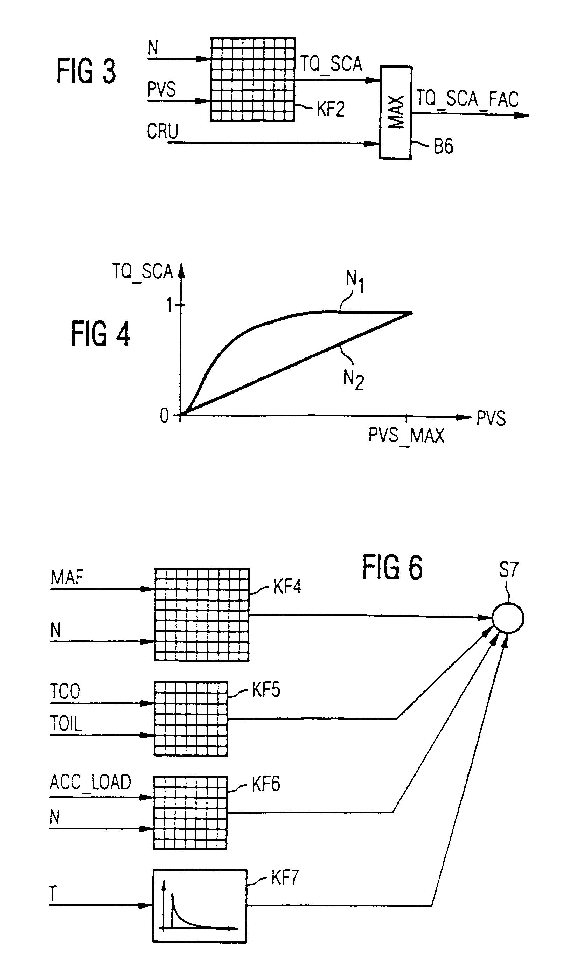

In Figur 3 ist dargestellt, wie der Drehmomentfaktor TQ_SCA_FAC ermittelt wird. Abhängig von der Drehzahl und dem Pedalwert wird aus einem Kennfeld KF2 ein Kennfeldwert TQ_SCA ermittelt. Figur 4 zeigt beispielhaft für zwei Drehzahlen N₁ und N₂ den Verlauf der zugehörigen Kennlinien aus dem Kennfeld KF2 über den Pedalwert PVS aufgetragen. Die Drehzahl N₁ repräsentiert eine niedrige Drehzahl (zum Beispiel 1500 Umin⁻ ¹). Bei einer derartigen Drehzahl wünscht der Fahrer, daß ihm bei einem nur wenig durchgetretenen Fahrpedal, das heißt bei einem niedrigen Pedalwert, bereits ein hoher Anteil des zu Verfügung stehenden Drehmoments an der Kupplung zur Verfügung gestellt wird. Demnach weist die Kennlinie für die Drehzahl N₁ bei niedrigen Werten des Pedalwertes eine hohe Steigung auf und nähert sich dann asymptotisch dem Wert 1 des Kennfeldwertes TQ_SCA bei dem maximalen Pedalwert PVS_MAX. Bei einer höheren Drehzahl N₂ (zum Beispiel 4000 Umin⁻¹) wünscht der Fahrer eher einen linearen Anstieg des ihm an der Kupplung zu Verfügung stehenden Drehmoments mit dem Pedalwert. Wie anhand dieses Beispiels dargelegt wurde, kann abhängig von der Drehzahl N eine unterschiedliche Beziehung zwischen dem Kennfeldwert TQ_SCA und dem Pedalwert hergestellt werden. Ebenso können mehrere unterschiedliche Kennfelder KF2 in der Steuereinrichtung 4 abgelegt sein, die in Abhängigkeit von den Betriebsgrößen ausgewählt werden. Der Kennfeldwert TQ_SCA und der Stellwert CRU sind Eingangsgrößen in den Block B6, in dem durch Maximalauswahl der Eingangsgrößen die Ausgangsgröße das Drehmoment TQ_SCA_FAC ermittelt wird.

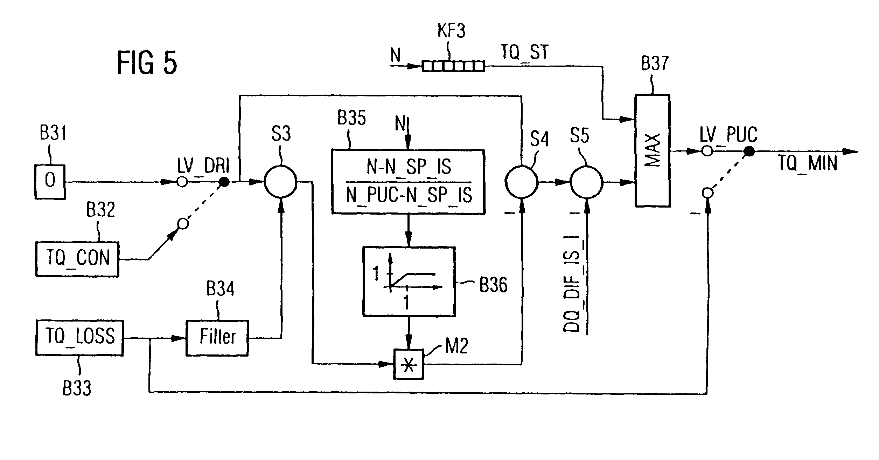

Die Figur 5 zeigt ein Blockschaltbild zum Bestimmen des minimalen Drehmoments TQ_MIN an der Kupplung 261. Bei dem Block B31 hat die Ausgangsgröße den Wert 0. Die Ausgangsgröße TQ_CON des Blocks B32 repräsentiert das Verlustmoment eines Wandlers bei einem Automatikgetriebe. Bei einem Kraftfahrzeug mit einem Schaltgetriebe ist die Ausgangsgröße des Blocks 31 immer auf die Summierstelle S3 und die Summierstelle S4 geführt. Bei einem Kraftfahrzeug mit Automatikgetriebe ist der Schalter LV_DRI bei nichteingelegter Fahrstufe so eingestellt, daß die Ausgangsgröße des Blocks B31 ebenfalls auf den Schalter S3 und S4 geführt ist. Bei eingelegter Fahrstufe muß das Verlustmoment des Wandlers des Automatikgetriebes überbrückt werden. Demnach ist der Schalter LV_DRI in einer zweiten Stellung in der die Ausgangsgröße TQ_CON des Blocks B32 auf die Summierstelle S3 und S4 geführt ist.

Die Ausgangsgröße des Blocks B33, das Verlustdrehmoment TQ_LOSS stellt die Eingangsgröße eines Filterblocks B34 dar, in dem das Verlustdrehmoment TQ_LOSS einer gleitenden Mittelwertbildung unterzogen wird. Dabei wird jeweils der gemittelte Wert des Verlustdrehmoments TQ_LOSS aus dem letzten Berechnungszeitraum mit einem Bewertungsfaktor, der kleiner oder gleich eins ist, gewichtet und zu dem Wert des Verlustdrehmoments TQ_LOSS im aktuellen Berechnungszeitraum gewichtet mit eins minus dem Bewertungsfaktor addiert.

Das gemittelte Verlustdrehmoment ist an die Summierstelle S3 geführt, deren Ausgangsgröße eine Eingangsgröße der Multiplizierstelle M2 darstellt. Nach der Berechnungsvorschrift, die in Block B35 angegeben ist, wird ein Wichtungsfaktor berechnet, der der Abweichung der Drehzahl N von einer Soll-Leerlaufdrehzahl N_SP_IS gewichtet mit dem Kehrwert der Differenz aus der Solldrehzahl N_PUC beim Schubabschalten des Motors und der Soll-Leerlaufdrehzahl N_SP_IS entspricht. Dieser Wichtungsfakor wird im Block B36 auf den Wertbereich 0 bis 1 begrenzt, und dann als zweite Eingangsgröße an die Multiplizierstelle M2 geführt. Die negative Ausgangsgröße der Multipliziertstelle M2 ist die zweite Eingangsgröße der Summierstelle S4. Die Ausgangsgröße der Summierstelle S5, an der noch ein Integralbeiwert TQ_DIF_IS_I eines Leerlaufreglers addiert wird, ist zusammen mit der Größe TQ_ST eine Eingangsgröße des Blocks B37, in dem über eine Maximalauswahl der Eingangsgröße die Ausgangsgröße ermittelt wird. Der Integralbeiwert TQ_DIF_IS_I sorgt für eine stationäre Genauigkeit des minimalen Drehmoments TQ_MIN.

Die Größe TQ_ST wird aus einem Kennfeld KF3 in Abhängigkeit von der Drehzahl N ermittelt. Die Größe TQ_ST nimmt bei sehr niedrigen Drehzahlen des Motors, also beim Start, ein derart hohen Wert an, daß bei einem entsprechenden Moment an der Kupplung die Schwungmasse des Motors beschleunigt wird, so daß die Drehzahl N schnell ansteigt.

Das minimale Drehmoment TQ_MIN entspricht in allen Betriebszuständen, außer dem Betriebszustand des Schubabschaltens dem Wert der Ausgangsgröße des Blocks B37. Im Betriebszustand des Schubabschaltens entspricht das minimale Drehmoment TQ_MIN dem negativen Wert des Verlustdrehmoments TQ_LOSS. Demnach kann das gesamte Verlustdrehmoment TQ_LOSS bei einer Bergabfahrt des Kraftfahrzeugs, bei der sich die Brennkraftmaschine im Betriebszustand des Schubabschaltens befindet, genutzt werden.

Sinkt die Drehzahl von der Drehzahl N_PUC des Schubabschaltens auf die Soll-Leerlaufdrehzahl N_SP_IS ab, so wird das minimale Drehmoment TQ_MIN linear bis auf den Integralbeiwert TQ_DIF_IS_I und, falls die Fahrstufe des Automatikgetriebes eingelegt ist, auf das Verlustmoment TQ_CON des Wandlers reduziert. Dadurch ist gewährleistet, daß das Verlustdrehmoment TQ_LOSS bei Drehzahlen N, die gleich oder kleiner der Soll-Leerlaufdrehzahl N_SP_IS sind, nicht zum Bremsen des Kraftfahrzeugs verwendet werden kann, somit bleibt dann auch der Motorlauf stabil.

Oberhalb der Drehzahl N_PUC des Schubabschaltens der Brennkraftmaschine entspricht das minimale Drehmoment TQ_MIN dem negativen Wert des Verlustmoments TQ_LOSS, das im Filterblock 34 der gleitenden Mittelwertbildung unterzogen worden ist. Es kann demnach ganz zum Verzögern des Kraftfahrzeugs genutzt werden.

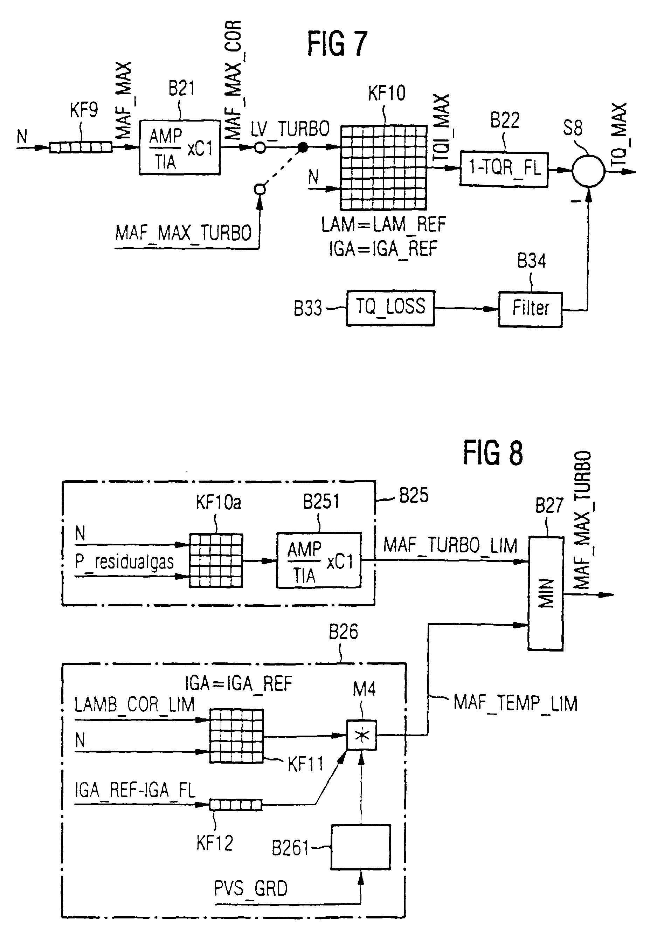

Das Verlustdrehmoment TQ_LOSS (Figur 6) berücksichtigt Reibungs- und Pumpverluste der Brennkraftmaschine, eine Temperaturkorrektur, Zusatzlasten wie der Kompressor einer Klimaanlage und einen zeitabhängiger Temperaturbeiwert. Die Reibungs- und Pumpverluste werden in Abhängigkeit von dem gemessenen Luftmassenstrom MAF und Drehzahl N aus einem Kennfeld KF4 ermittelt und sind Eingangsgrößen der Summierstelle S7. Die Temperaturkorrektur wird in Abhängigkeit von der Motortemperatur, die vorzugsweise aus der Kühlwassertemperatur TCO und/oder der Öltemperatur TOIL abgeleitet wird, aus einem Kennfeld KF5 ermittelt und ist eine zweite Eingangsgröße der Summierstelle S7. Die Zusatzlast wird aus einem Kennfeld KF6 in Abhängigkeit von einem Zusatzlastwert ACC_LOAD und der Drehzahl N ermittelt und als dritte Eingangsgröße an die Summierstelle S7 geführt. Im Kennfeld KF7 sind zeitabhängiger Temperaturbeiwerte abgelegt. Diese Temperaturbeiwerte geben den Anteil des Verlustdrehmoments TQ_LOSS an in der Start-und Warmlaufphase der Brennkraftmaschine an, der dadurch bedingt ist, daß das Öl erst in den Umlauf gebracht werden muß, daß der Druckaufbau an den Schmierstellen der Brennkraftmaschine erfolgen muß und daß das Öl anfangs noch ganz zäh ist.

Darüber hinaus wird vorzugsweise eine Start-Motortemperatur in dem Betriebszustand des Starts der Brennkraftmaschine erfaßt und ein Korrekturwert für das Verlustdrehmoment TQ_LOSS ermittelt, der abhängt von der Start-Motortemperatur und der Zeit.

Des weiteren kann bei der Ermittlung des Verlustdrehmoments auch noch der Drehmomentanteil berücksichtigt sein, den ein Generator des Kraftfahrzeugs benötigt um die Bordnetzspannung in etwa konstant zu halten. Es ist selbstverständlich, daß die Ermittlung des Verlustdrehmoments auch unabhängig von den Merkmalen des Patentanspruchs 1 brauchbar und einsetzbar ist.

Das maximale Drehmoment TQ_MAX an der Kupplung 261 wird wie in Figur 7 dargestellt ermittelt. Aus dem Kennfeld KF 9 wird in Abhängigkeit von der Drehzahl ein Wert MAF_MAX des maximalen Luftstroms bei einer Bezugstemperatur (zum Beispiel 293 K) und einem Bezugsdruck (zum Beispiel 1013 mbar) ausgelesen. Der Wert MAF MAX ist abhängig von der Drehzahl, da zum Beispiel bei bestimmten Drehzahlen im Ansaugkanal durch Resonanzeffekte eine bessere Befüllung der Zylinder 2 gewährleistet wird, bei niedrigen Drehzahlen hingegen durch Ventilüberschneidungen der Motorventile eine schlechtere Befüllung der Zylinder 2 gegeben ist. Der Wert MAF_MAX wird im Block B21 in Abhängigkeit von der Umgebungstemperatur TIA, dem Umgebungsdruck AMP und einer Konstante C1 (z.B 293/1013) korrigiert. Bei Brennkraftmaschinen ohne Turbolader stellt dieser korrigierte Wert MAF_MAX_COR eine Eingangsgröße für das Kennfeld KF10 dar. Die andere Eingangsröße für das Kennfeld KF10 ist die Drehzahl N. Bei Brennkraftmaschinen mit Turboladern stellt der Wert MAF_MAX_TURBO neben der Drehzahl N eine Eingangsgröße in das Kennfeld KF10 dar. Die Werte des Kennfeldes KF10 entsprechen den Werten eines indizierten maximalen Drehmoments TQI_MAX bei einem Referenz-Lambdawert LAM_REF(zum Beispiel 0,9) und einem Referenzzündwinkel IGA_REF. Unter einem indizierten maximalen Drehmoment TQI_MAX wird in diesem Zusammenhang das rein durch die Verbrennung im Zylinder entstehende Drehmoment ohne Berücksichtigung irgendwelcher Verluste verstanden. Das maximale indizierte Drehmoment TQI_MAX wird im Block B22 mit einen Korrekturfaktor 1 - TQR_FL korrigiert, der den aktuellen Lambdawert und Zündwinkelwert berücksichtigt. An der Summierstelle S8 wird von dem korrigierten indizierten maximalen Drehmoment TQI_MAX der Wert des Verlustdrehmoments TQ_LOSS abgezogen. Die Ausgangsgröße der Summierstelle S8 entspricht dann dem maximalen Drehmoment TQ_MAX.

Bei einer Brennkraftmaschine mit Turbolader wird der Wert MAF_MAX_TURBO des maximalen Luftmassenstroms, wie in Figur 8 dargestellt, ermittelt. Die maximale Luftmasse MAF_TURBO_LIM im Zylinder zum mechanischen Schutz (Drehzahlgrenze, Pumpgrenze) des Turboladers wird aus einem Kennfeld KF10a in Abhängigkeit von der Drehzahl N und dem Restgaspartialdruck P_RESID für den Referenzdruck (z.B. 1013 [mbar]) und die Referenztemperatur (z.B. 293 [K]) ermittelt, für die das Kennfeld KF10a durch stationäre Messungen aufgenommen wurde. Dieser Wert wird im Block B251 an den Umgebungsdruck AMP und die Umgebungsemperatur TIA angepaßt.

Der maximale Luftmassenstrom MAF_TEMP_LIM zum Temperaturschutz errechnet sich wie folgt: In Abhängigkeit von einer Vollastluftzahl LAMB_COR LIM, die dem Lambdawert bei Vollast entspricht, und der Drehzahl N wird aus einem Kennfeld 11 ein Wert ermittelt, bei dem bei einem Referenzzündwinkel IGA_REF die zulässige Bauteiltemperatur nicht überschritten wird. Dieser Wert stellt eine Eingangsgröße in die Multiplizierstelle M4 dar, deren Ausgangsgröße der maximale Luftmassenstrom MAF_TEMP_LIM zum Temperaturschutz ist. Eine weitere Eingangsgröße in die Multiplizierstelle stellt ein Faktor dar, der die Ausgangsgröße des Kennfeldes KF12 ist und der demnach abhängig von der Differenz zwischen dem Referenzzündwinkel IGA_REF und dem Zündwinkel bei Vollast IGA_FL ist.

Um eine kurzzeitige Überhöhung der maximalen Luftmasse MAF_TEMP_LIM zum Temperaturschutz zu ermöglichen, wird an der Multiplizierstelle M4 ein weiterer Faktor zugeführt, der die Ausgangsgröße des Blocks B261 ist. Abhängig von dem Gradienten PVS_GRD des Pedalwertes PVS, wird die Ausgangsgröße des Blocks B261 gegebenenfalls für eine kurze Zeitspanne deutlich über den Wert 1 erhöht. Dadurch ist kurzzeitig ein sehr hoher Luftmassenstrom in den Zylinder 22 möglich, ohne thermische Schäden an dem Turbolader und/oder der Brennkraftmaschine zu verursachen. Dies ist insbesondere bei einem Überholmanöver des Kraftfahrzeugs ein großer Vorteil.

Im Block B27 wird eine Minimalauswahl zwischen den Eingangsgrößen MAF_TEMP_LIM und MAF_TURBO_LIM vorgenommen. Die Ausgangsgröße des Blocks B27 stellt dann den Wert des maximalen Luftmassenstroms MAF_MAX_TURBO bei einer Brennkraftmaschine mit Turbolader dar.

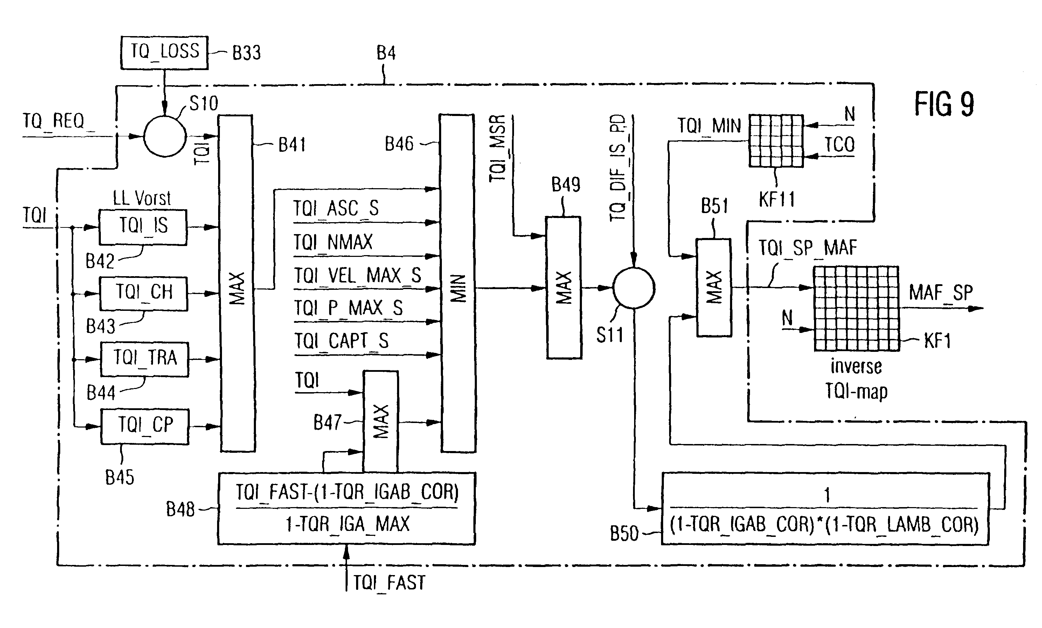

In dem Blockschaltbild von Figur 9 ist dargestellt, wie aus dem Solldrehmoment TQ_REQ ein Luftmassensollwert bestimmt werden kann. Es ist für den Fachmann klar ersichtlich, daß dieses Verfahren auch ohne die Merkmale des Patentanspruchs 1 unabhängig brauchbar und einsatzfähig ist.

Das Solldrehmoment TQ_REQ und das Verlustdrehmoment TQ_LOSS sind die Eingangsgrößen der Summierstelle S10, deren Ausgangsgröße dann das indizierte Drehmoment TQI ist. Im Korrekturblock B4 wird das indizierte Drehmoment TQI in Abhängigkeit von Betriebsgrößen korrigiert. So wird im Block B41 eine Maximalauswahl aller Eingangsgrößen durchgeführt. Die Eingangsgrößen sind Werte für Vorhaltedrehmomente, daß heißt es wird gegenüber dem indizierten Drehmoment TQI eine definierte Füllungserhöhung in dem Zylinder 22 in Abhängigkeit von dem indizierten Drehmoment TQI vorgenommen. Derartige Vorhaltedrehmomente sind beispielsweise die Ausgangsgrößen der Blöcke B42, in dem ein Vorhaltedrehmoment TQI_IS in Abhängigkeit von der Vorsteuergröße des Leerlaufreglers ermittelt wird, die Ausgangsgröße des Blocks B43, in dem ein Vorhaltemoment TQI_CH in Abhängigkeit von der Katalysatoraufheizung ermittelt wird, die Ausgangsgröße des Blocks B44 in dem ein Vorhaltedrehmoment TQI_TRA zur Begrenzung von Ruckelschwingungen des Kraftfahrzeugs ermittelt wird, die Ausgangsgröße des Block B45, in dem ein Wert des Vorhaltedrehmoments TQI_CP für die Tankentlüftung ermittelt wird.

Der Vorteil dieser Vorhaltedrehmomente wird am Beispiel der Dämpfung der Ruckelschwingungen im Kraftfahrzeug näher erläutert. Bei dem Vorhaltedrehmoment TQI_TRA wird die Füllung im Zylinder 22 entsprechend erhöht, gleichzeitig wird der Zündwinkel nach spät verstellt, so daß das Drehmoment an der Kupplung in etwa dem indizierten Drehmoment TQI entspricht. Abhängig von anderen Betriebsgrößen (zum Beispiel einem Gradienten der Drehzahl N), wird gegenphasig zum dem Gradienten der Drehzahl N eine Modulation des Drehmoments in positiver und negativer Richtung durch einen Zündwinkeleingriff in Echtzeit durchgeführt und dadurch die Ruckelschwingungen gedämpft.

Die Ausgangsgröße des Blocks B41 ist eine Eingangsgröße in den Block B46, in dem dann eine Minimalauswahl der Eingangsgrößen vorgenommen wird. Durch diese Minimalauswahl wird gewährleistet, daß die Ausgangsgröße des Blocks B46 abhängig vom Betriebszustand der Brennkraftmaschine keinen sicherheitsrelevanten Wert überschreitet. Der Wert TQI_ASC_S entspricht der Begrenzung des indizierten Drehoments TQI durch eine Antischlupfregelung. Der Wert TQI_NMAX entspricht einer Drehzahlbegrenzung, die Eingangsgröße TQI_VEL_MAX_S entspricht einer Geschwindigkeitsbegrenzung, der Wert der Eingangsgröße TQI_P_MAX entspricht einer Leistungsbegrenzung, der Wert TQI_CAT_P entspricht einem Katalysatorschutz.

Die Eingangsgröße TQI_FAST in den Block B48 entspricht dem indizierten Drehmoment, das minimal durch eine Zündwinkelspätverstellung einstellbar sein muß. So ist z.B. bei einem Getriebeeingriff eine schnelle Drehmomentenkoordination notwendig. Im Block B48 wird dazu das maximal zulässige Drehmoment in Abhängigkeit von einem Basis-Referenz-Zündwinkelfaktor TQR_IGAB_COR und einem Zündwinkel-Drehmoment Reduktionsfaktor TQR_IGA_MAX bestimmt nach der dort angegebenen Berechnungsvorschrift ermittelt. Das maximal zulässige Drehmoment und das indizierte Drehmoment TQI sind dann Eingangsgrößen für den Block B47, dessen Ausgangsgröße über eine Maximalauswahl der Eingangsgrößen ermittelt wird und die wiederum eine Eingangsgröße für den Block 46 darstellt.

Durch die Maximalauswahl der Eingangsgrößen des Blocks B49, nämlich der Ausgangsgröße des Blocks B46 und einem Wert TQI_MSR, der eine Stellgröße darstellt, die von einer an sich bekannten Motorschleppmomentregelung ermittelt wird, ist sichergestellt, daß die Ausgangsgröße des Blocks B49 einen minimalen Wert nicht unterschreitet. Die Ausgangsgröße des Blocks B49 ist eine Eingangsgröße der Summierstelle S11, an der ein P- und ein D-Anteil der Stellgröße TQ_DIF_IS_P,D des Leerlaufreglers herangeführt ist.

Der Ausgangswert dieser Summierstelle S11 wird im Block B50 in Abhängigkeit von dem Basis-Referenz-Zündwinkelfaktor TQR_IGAB_COR TQR_IGAB_COR und einem Basis-Referenz-Lambdafaktor TQR_LAMB_COR korrigiert und dann als Eingangsgröße an einen Block B41 geführt. Die zweite Eingangsgröße des Blocks B51 ist ein Wert TQI_MIN, der aus einem Kennfeld KF13 in Abhängigkeit von der Drehzahl und der Kühlwassertemperatur TCO ermittelt wird. Durch diesen Wert wird sichergestellt, daß die Laufgrenze der Brennkraftmaschine nicht unterschritten wird, unterhalb derer kein stabiler Motorlauf möglich ist. Der Ausgangswert des Blocks B41 ist dann der Eingangswert des Kennfelds KF1, in den der entsprechende Luftmassensollwert MAF_SP ermittelt wird.

## Patentansprüche

1. Verfahren zum Steuern einer Brennkraftmaschine, der ein Pedalwertgeber (51) zugeordnet ist, der einen Pedalwert (PVS) erfaßt, die einen Drehzahlgeber (27) aufweist, der eine Drehzahl (N) erfaßt und der Mittel zum Erfassen von Betriebsgrößen der Brennkraftmaschine zugeordnet sind, wobei ein Solldrehmoment (TQ_REQ) für das kupplungsseitige Ende einer Kurbelwelle (26) ermittelt wird, wobei ein Stellsignal (α) für ein Stellglied der Brennkraftmaschine aus dem Solldrehmoment (TQ_REQ) abgeleitet wird, und wobei ein Verlustdrehmoment (TQ_LOSS) abhängig von der Drehzahl (N) und mindestens einer Betriebsgröße ermittelt wird, **dadurch gekennzeichnet,**
- daß das Solldrehmoment (TQ_REQ) aus einem Drehmomentfaktor (TQ_SCA_FAC), einem maximalen Drehmoment (TQ_MAX) an dem kupplungsseitigen Ende der Kurbelwelle (26) und einem minimalen Drehmoment (TQ_MIN) an dem kupplungsseitigen Ende der Kurbelwelle (26) ermittelt wird,
- daß der Drehmomentfaktor (TO_SCA_FAC) aus dem Pedalwert (PVS) und der Drehzahl (N) abgeleitet wird, und
- daß das maximale und das minimale Drehmoment (TQ_MIN,TQ_MAX) abhängig von der Drehzahl (N), dem Verlustdrehmoment (TQ_LOSS) und mindestens einer Betriebsgröße ermittelt werden.

2. Verfahren nach Anspruch 1, dadurch gekennzeichnet, daß das maximale Drehmoment (TQ_MAX) aus der Differenz von einem indizierten maximalen Drehmoment (TQI_MAX) und dem Verlustdrehmoment (TQ_LOSS) ermittelt wird und daß das indizierte maximale Drehmoment (TQI_MAX) abhängig von der Drehzahl (N), einem Umgebungsdruck (AMP) und einer Umgebungstemperatur (TIA) berechnet wird.

3. Verfahren nach Anspruch 1 oder 2, dadurch gekennzeichnet, daß das minimale Drehmoment (TQ_MIN) in Abhängigkeit von dem Betriebszustand der Brennkraftmaschine ermittelt wird.

4. Verfahren nach Anspruch 3, dadurch gekennzeichnet, daß dem minimalen Drehmoment (TQ_MIN) in dem Betriebszustand des Schubabschaltens das negative Verlustdrehmoment (TQ_LOSS) zugeordnet wird.

5. Verfahren nach Anspruch 3 oder 4, dadurch gekennzeichnet, daß das minimale Drehmoment (TQ_MIN) außerhalb des Betriebszustands des Schubabschaltens abhängig von dem Abweichen der Drehzahl (N) von einer Soll-Leerlaufdrehzahl (N_SP_IS) ermittelt wird.

6. Verfahren nach einem Ansprüche 1 bis 5, dadurch gekennzeichnet, daß der Drehmomentfaktor (TO_SCA_FAC) aus einer Maximalauswahl von einem Kennfeldwert (TQ_SCA) und einem Stellwert (CRU) eines Fahrgeschwindigkeitsreglers hervorgeht, und daß der Kennfeldwert (TQ_SCA) in Abhängigkeit von der Drehzahl (N) und dem Pedalwert (PVS) ermittelt wird.

7. Verfahren nach einem der Ansprüche 1 bis 6, dadurch gekennzeichnet,
- daß eine Motortemperatur erfaßt wird und das Verlustdrehmoment (TQ_LOSS) abhängig von der Motortemperatur ermittelt wird,
- daß eine Start-Motortemperatur erfaßt wird,
- daß ein Korrekturwert für das Verlustdrehmoment (TQ_LOSS) ermittelt wird, der abhängt von der Start-Motortemperatur und der Zeit,und
- daß das Verlustdrehmoment (TQ_LOSS) mit dem Korrekturwert korrigiert wird.

8. Verfahren nach Anspruch 7, dadurch gekennzeichnet, daß eine Kühlwassertemperatur (TCO) und/oder eine Öltemperatur (TOIL) des Motors erfaßt wird, und daß die Motortemperatur aus der Kühlwassertemperatur (TCO) und/oder der Öltemperatur (TOIL) ermittelt wird.

9. Verfahren nach Anspruch 1, dadurch gekennzeichnet, daß das Verlustdrehmoment (TQ_LOSS) aus einem Pump- und Reibungsverlustwert, einem Zusatzlastwert und einem Zeitkorrekturwert gebildet wird.

10. Verfahren nach einem der Ansprüche 1 bis 9, dadurch gekennzeichnet, daß ein indiziertes Drehmoment (TQI) aus dem Verlustdrehmoment (TQ_LOSS) und dem Solldrehmoment (TQ_REQ) gebildet wird, daß ein Betriebsgrößendrehmoment (TQI_SP_MAF) in Abhängigkeit von dem indizierten Drehmoment (TQI) und von Betriebsgrößen ermittelt wird

## Claims

1. Method for the control of an internal combustion engine, to which a pedal sensor (51) is assigned which registers a pedal value (PVS), which has a speed sensor (27) which registers a rotational speed (N), and to which resources are assigned for registering operational variables for the internal combustion engine, a required torque (TQ_REQ) being determined for the clutch-side end of a crankshaft (26), a control signal (α) being derived for a final control element of the internal combustion engine from the required torque (TQ_REQ), and a loss torque (TQ_LOSS) being determined dependent on the rotational speed (N) and at least one operational variable,
**characterised in that**
- the required torque (TQ_REQ) is determined from a torque factor (TQ_SCA_FAC), a maximum torque (TQ_MAX) at the clutch-side end of the crankshaft (26), and minimum torque (TQ_MIN) at the clutch-side end of the crankshaft (26),
- the torque factor (TO_SCA_FAC) is derived from the pedal value (PVS) and the rotational speed (N), and,
- the maximum torque and the minimum torque (TQ_MAX, TQ_MIN) are determined dependent on the rotational speed (N), the loss torque (TQ_LOSS) and at least one operational variable.

2. Method in accordance with Claim 1, characterised in that the maximum torque (TQ_MAX) is determined from the difference between an indexed maximum torque (TQI_MAX) and the loss torque (TQ_LOSS), and that the indexed maximum torque (TQI_MAX) is calculated dependent on the rotational speed (N), an ambient pressure (AMP) and an ambient temperature (TIA).

3. Method in accordance with Claim 1 or 2, characterised in that the minimum torque (TQ_MIN) is determined dependent on the operational state of the internal combustion engine.

4. Method in accordance with Claim 3, characterised in that the negative loss torque (TQ_LOSS) is assigned to the minimum torque (TQ_MIN) in the operational state when engine drive power is cut off.

5. Method in accordance with Claim 3 or 4, characterised in that the minimum torque (TQ_MIN) is determined outside of the operational state when engine drive power is cut off, dependent on the deviation of the rotational speed (N) from a required idling rotational speed (N_SP_IS).

6. Method in accordance with Claims 1 to 5, characterised in that the torque factor (TQ_SCA_FAC) originates from a maximum selection made from a characteristic field value (TQ_SCA) and a correcting variable value (CRU) from a vehicle speed control facility, and that the characteristic field value (TQ_SCA) is determined dependent on the rotational speed (N) and the pedal value (PVS).

7. Method in accordance with Claims 1 to 6, characterised in that
- an engine temperature is registered and the loss torque (TQ_LOSS) is determined dependent on the engine temperature,
- a starting engine temperature is registered,
- a correction value which is dependent on the starting engine temperature and the time is determined for the loss torque (TQ_LOSS), and
- the loss torque (TQ_LOSS) is corrected with the correction value.

8. Method in accordance with Claim 7, characterised in that a cooling water temperature (TCO) and/or an oil temperature (TOIL) is registered for the engine, and that the engine temperature is determined from the cooling water temperature (TCO) and/or the oil temperature (TOIL).

9. Method in accordance with Claim 1, characterised in that the loss torque (TQ_LOSS) is formed from a pump and friction loss value, an additional load value and a time correction value.

10. Method in accordance with one of the Claims 1 to 9, characterised in that an indexed torque (TQI) is formed from the loss torque (TQ_LOSS) and the required torque (TQ_REQ), that an operational variable torque (TQI_SP_MAF) is determined dependent on the indexed torque (TQI) and on operational variables.

## Revendications

1. Procédé de commande d'un moteur à combustion interne, auquel est associé un détecteur de position de pédale (51) qui relève une valeur de position de pédale (PVS), qui présente un capteur de vitesse de rotation (27) relevant une vitesse de rotation (N), et auquel sont associés des moyens pour relever des grandeurs de fonctionnement du moteur à combustion interne, tandis qu'une valeur de consigne du couple (TQ_REQ) pour l'extrémité côté embrayage d'un vilebrequin (26) est déterminée, un signal de réglage (α) pour un organe de réglage du moteur à combustion interne étant engendré à partir de la valeur de consigne du couple (TQ_REQ), et un couple de pertes (TQ_LOSS) étant déterminé en fonction de la vitesse de rotation (N) et d'au moins une grandeur de fonctionnement, caractérisé en ce que
- la valeur de consigne du couple (TQ_REQ) est déterminée à partir d'un facteur de couple (TQ_SCA_FAC), à partir d'un couple maximal (TQ_MAX) sur l'extrémité côté embrayage du vilebrequin (26), et à partir d'un couple minimal (TQ_MIN) sur l'extrémité côté embrayage du vilebrequin (26),
- en ce que le facteur de couple (TO_SCA_FAC) est déterminé à partir de la valeur de pédale (PVS) et de la vitesse de rotation (N), et
- en ce que le couple maximal (TQ_MAX) et le couple minimal (TQ_MIN) sont déterminés en fonction de la vitesse de rotation (N), du couple de pertes (TQ_LOSS), et d'au moins une grandeur de fonctionnement,

2. Procédé suivant la revendication 1, caractérisé en ce que le couple maximal (TQ_MAX) est déterminé à partir de la différence d'un couple maximal indexé (TQI_MAX) et du couple de pertes (TQ_LOSS), et en ce que le couple maximal indexé (TQI_MAX) est calculé en fonction de la vitesse de rotation (N), d'une pression ambiante (AMP) et d'une température ambiante (TIA).

3. Procédé suivant la revendication 1 ou la revendication 2, caractérisé en ce que le couple minimal (TQ_MIN) est déterminé en fonction de l'état de fonctionnement du moteur à combustion interne.

4. Procédé suivant la revendication 3, caractérisé en ce qu'au couple minimal (TQ_MIN) dans l'état de fonctionnement correspondant à la coupure d'injection, est associé le couple négatif correspondant aux pertes (TQ_LOSS).

5. Procédé suivant la revendications 3 ou la revendication 4, caractérisé en ce que le couple minimal (TQ_MIN) en dehors de l'état de fonctionnement correspondant à la coupure d'injection est déterminé en fonction de l'écart de la vitesse de rotation (N) avec une valeur de consigne de la vitesse de rotation au ralenti (N_SP_IS).

6. Procédé suivant l'une des revendications 1 à 5, caractérisé en ce que le facteur de couple (TO_SCA_FAC) est obtenu en sélectionnant le maximum d'une valeur de champ de caractéristiques (TQ_SCA) et d'une valeur de réglage (CRU) d'un régulateur de vitesse de déplacement, et en ce que la valeur de champ de caractéristiques (TQ_SCA) est déterminée en fonction de la vitesse de rotation (N) et de la valeur de position de pédale (PVS).

7. Procédé suivant l'une des revendications 1 à 6, caractérisé en ce que
- on relève une température de moteur et en ce que le couple de pertes (TQ_LOSS) est déterminé en fonction de la température de moteur,
- en ce qu'on relève une température de moteur au démarrage,
- en ce qu'une valeur de correction pour le couple de pertes (TQ_LOSS) est déterminée, cette valeur de correction dépendant de la température du moteur au démarrage et du temps,
- et en ce que le couple de pertes (TQ_LOSS) est corrigé au moyen de la valeur de correction.

8. Procédé suivant la revendication 7, caractérisé en ce qu'une température d'eau de refroidissement (TCO) et/ou une température d'huile (TOIL) du moteur sont relevées et en ce que la température du moteur est déterminée à partir de la température de l'eau de refroidissement (TCO) et/ou de la température de l'huile (TOIL).

9. Procédé suivant la revendication 1, caractérisé en ce que le couple de pertes (TQ_LOSS) est formé à partir d'une valeur de pertes dues à l'effet de pompage et aux frottements, à partir de d'une valeur de charge supplémentaire et à partir d'une valeur de correction temporelle.

10. Procédé suivant l'une des revendications 1 à 9, caractérisé en ce qu'un couple indexé (TQI) est formé à partir du couple de pertes (TQ_LOSS) et de la valeur de consigne du couple (TQ_REQ) et en ce qu'un couple correspondant aux grandeurs de fonctionnement (TQI_SP_MAF) est déterminé en fonction du couple indexé (TQI) et en fonction de grandeurs de fonctionnement.
